# DEMANDE DE BREVET EUROPEEN

(11) **EP 3 190 303 A1**
(43) Date de publication de la demande: **12.07.2017**
(21) Numéro de dépôt: 17150462.4
(22) Date de dépôt: 05.01.2017
(51) Int. Cl.: F16D 13/75

(54) **DISPOSITIF D'EMBRAYAGE A RATTRAPAGE D'USURE, NOTAMMENT POUR VEHICULE AUTOMOBILE**

(30) Priorité: 08.01.2016 FR 1650170
(71) Demandeur: Valeo Embrayages, 80009 Amiens Cedex 2 (FR)
(72) Inventeur: LEBAS, Gilles, 80800 VILLERS BRETONNEUX (FR); LAURIDSEN, Carsten, 60000 BEAUVAIS (FR); COMMEINE, Emmanuel, 80290 COURCELLES SOUS MOYENCOURT (FR)
(74) Mandataire: Cardon, Nicolas

(57) **Abrégé**

L'invention concerne un dispositif d'embrayage (1) comportant un plateau de pression (3), des moyens de détection et de rattrapage de l'usure du disque de friction comportant au moins un organe mobile (12, 16) comportant une rampe (14) coopérant avec une contre-rampe (15) tournée du côté du plateau de pression (3), l'organe mobile (12, 16) étant sollicité par un premier organe élastique (19) comportant une première extrémité reliée à l'organe de détection mobile (16) et une seconde extrémité reliée au plateau de pression (3).

## Description

La présente invention concerne un dispositif d'embrayage à rattrapage d'usure, notamment pour véhicule automobile.

Un dispositif d'embrayage comporte classiquement un plateau de réaction, un plateau de pression mobile et un disque de friction monté entre lesdits plateaux de réaction et de pression. Le mouvement du plateau de pression est commandé par un diaphragme, lui-même commandé par une butée d'embrayage.

Le plateau de pression est ainsi mobile entre une position d'embrayage dans laquelle le disque de friction est serré entre lesdits plateaux de pression et de réaction, et une position de débrayage dans laquelle le disque de friction est libéré.

L'utilisation du dispositif d'embrayage provoque une usure des garnitures du disque de friction ainsi que des contre-matériaux des plateaux de pression et de réaction associés. Ceci se traduit par une variation de la position du plateau de pression par rapport au diaphragme associé et/ou par rapport au plateau de réaction, générant une variation de l'effort de serrage du disque de friction et une modification du point de léchage et de la course de la butée d'embrayage. On rappelle que le point de léchage est la position à partir de laquelle un couple peut être transmis au travers du dispositif d'embrayage.

Un dispositif d'embrayage à rattrapage d'usure est connu du document FR 2 780 119. Ce dispositif comporte un couvercle à l'intérieur duquel est monté un plateau de pression destiné à venir en appui sur un disque de friction, un diaphragme intercalé entre le couvercle et le plateau de pression, servant à l'actionnement du plateau de pression entre une position totalement embrayée dans laquelle le dit plateau de pression est poussé contre le disque de friction, et une position totalement débrayée dans laquelle ledit plateau de pression est écarté du disque de friction par l'intermédiaire de moyens de rappel du plateau de pression.

Des moyens de rattrapage de l'usure du disque de friction sont intercalés entre le diaphragme et le plateau de pression, et comprennent au moins un organe de rattrapage mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position angulaire de la rampe par rapport à la contre-rampe.

Le dispositif comporte en outre des moyens de détection de l'usure aptes à autoriser le déplacement de l'organe mobile des moyens de rattrapage d'usure en cas d'usure du disque de friction et aptes à empêcher un tel déplacement lorsque cette usure n'est pas suffisante, lesdits moyens de détection comportant au moins un organe de détection mobile, dans une plage déterminée, par rapport à l'organe de rattrapage et comportant une rampe coopérant avec une contre-rampe tournée du côté du plateau de pression.

Le dispositif comporte enfin un organe presseur venant contraindre les rampes desdits organes mobiles contre les contre-rampes associées, l'organe presseur étant apte à coopérer avec une butée fixe, de manière à libérer lesdits organes mobiles lorsqu'une usure du disque de friction est détectée.

L'organe de rattrapage mobile est sollicité à l'aide d'un ressort, de façon à rattraper le jeu entre celui-ci et l'organe presseur, lorsque ledit organe de rattrapage mobile est libéré par l'organe presseur et par le diaphragme. Par ailleurs, l'organe de détection mobile est sollicité par un autre ressort de façon à rattraper le jeu entre celui-ci et l'organe presseur, lorsque ledit organe de détection mobile est libéré par l'organe presseur et par le diaphragme.

En fonctionnement, l'ensemble est soumis, de façon alternée, à des phases successives d'embrayage et de débrayage.

En phase d'embrayage, le diaphragme appuie sur le plateau de pression, par l'intermédiaire de l'organe de rattrapage de jeu. En phase de débrayage, le plateau de pression est rappelé vers sa position de débrayage, par l'intermédiaire de moyens de rappel prenant généralement la forme de languettes élastiquement déformables.

Lorsque le disque de friction n'est pas usé et que les contre-matériaux des plateaux de pression et de réaction ne sont pas usés, l'organe presseur maintient constamment l'organe de détection et l'organe de rattrapage en appui sur le disque de pression : lesdits organes sont immobilisés.

En cas d'usure, l'organe presseur vient en appui sur la butée et un jeu se crée entre l'organe presseur et l'organe de détection. Comme ce dernier est contraint par un ressort, il est déplacé de façon à combler le jeu précité. En position embrayée, l'effort appliqué par le diaphragme sur l'organe de rattrapage empêche le déplacement de ce dernier, par appui et frottement sur le plateau de pression. Ensuite, lorsque le diaphragme est déplacé dans sa position débrayée, les languettes de rappel du plateau de pression tendent à plaquer le plateau de pression contre l'organe de rattrapage de jeu, et l'organe de rattrapage de jeu contre le diaphragme. L'effort exercé par les languettes de rappel est relativement faible de façon à autoriser, malgré les frottements en jeu, un déplacement de l'organe de rattrapage de jeu, sous l'effet de la contrainte appliquée par le ressort correspondant. Ce déplacement permet de rattraper le jeu entre l'organe presseur et l'organe de rattrapage. On rattrape ainsi l'usure du plateau de friction ainsi que l'usure des contre-matériaux des plateaux de pression et de réaction associés.

Un tel fonctionnement nécessite notamment l'utilisation de moyens de rappel du plateau de pression exerçant des efforts relativement faibles, pour permettre le déplacement de l'organe de rattrapage malgré les frottements en jeu. Ceci nuit au fonctionnement car de tels moyens de rappel peuvent transmettre des vibrations axiales et générer des phénomènes de pompage du plateau de pression.

Le document FR 2 761 429 divulgue un dispositif d'embrayage, notamment pour véhicule automobile, comportant un plateau de pression destiné à venir en appui sur un disque de friction du dispositif d'embrayage, des moyens de détection et de rattrapage de l'usure du disque de friction comportant au moins un organe mobile comportant une rampe coopérant avec une contre-rampe tournée du côté du plateau de pression, l'organe mobile étant sollicité par un premier organe élastique de façon à déplacer la rampe par rapport à la contre-rampe, le premier organe élastique comportant une première extrémité reliée à l'organe de détection mobile et une seconde extrémité reliée au plateau de pression.

En particulier, la seconde extrémité est reliée au plateau de pression par l'intermédiaire d'une goupille fendue montée dans un trou ménagé dans le plateau de pression.

Le montage d'un tel dispositif est relativement complexe. Par ailleurs, la présence d'un trou servant à loger la goupille tend à fragiliser le plateau de pression.

L'invention a notamment pour but d'apporter une solution simple, efficace et économique à ces problèmes. A cet effet, l'invention concerne un dispositif d'embrayage, notamment pour véhicule automobile, comportant
un plateau de pression destiné à venir en appui sur un disque de friction du dispositif d'embrayage,
des moyens de détection et de rattrapage de l'usure du disque de friction comportant au moins un organe de détection mobile comportant une rampe coopérant avec une contre-rampe tournée du côté du plateau de pression,
l'organe de détection mobile étant sollicité par un premier organe élastique de façon à déplacer la rampe par rapport à la contre-rampe, le premier organe élastique comportant une première extrémité reliée à l'organe de détection mobile et une seconde extrémité reliée au plateau de pression,
caractérisé en ce que la seconde extrémité du premier organe élastique comporte une partie de liaison engagée dans un évidement du plateau de pression.

L'insertion de la partie de liaison dans l'évidement permet de maintenir efficacement la seconde extrémité du premier organe élastique par rapport au plateau de pression, de façon à éviter qu'il ne se déplace sous l'effet des vibrations par exemple. Le montage d'un tel dispositif est par ailleurs simplifié et ne nécessite pas l'utilisation d'un élément supplémentaire, tel par exemple qu'une goupille.

L'évidement et la partie de liaison s'étendent par exemple circonférentiellement et peuvent être situés dans un plan radial par rapport à l'axe du plateau de pression.

La seconde extrémité du premier organe élastique peut présenter une forme de crochet.

Le premier organe élastique est par exemple un ressort hélicoïdal de traction formé à partir d'un fil métallique. La seconde extrémité est par exemple formée par pliage de l'extrémité dudit fil. L'extrémité libre du crochet peut alors former la partie de liaison destinée à venir s'engager dans l'évidement du plateau de pression. Le crochet peut en outre venir en appui sur une surface d'appui du plateau de pression de façon à contraindre le premier organe élastique.

L'évidement peut être formé dans un plot du plateau de pression, la seconde extrémité en forme de crochet étant montée sur le plot. Le plot s'étend par exemple selon l'axe du plateau de pression. Le plot peut alors comporter une extrémité libre et des surfaces latérales. L'évidement peut être formé dans l'une des faces latérales, par exemple la face latérale tournée radialement vers l'intérieur ou vers l'extérieur. La seconde extrémité en forme de crochet peut également venir prendre appui sur une face ou extrémité latérale opposée à la première extrémité du premier organe élastique, lorsque le premier organe élastique est un ressort de compression.

La seconde extrémité du premier organe élastique peut présenter une première partie rectiligne, une deuxième partie rectiligne, située radialement à l'intérieur de la première partie et parallèle à cette dernière, les première et deuxième parties étant reliées par exemple par une partie courbe, une troisième partie, par exemple rectiligne, s'étendant radialement, c'est-à-dire s'étendant sensiblement perpendiculairement à la deuxième partie et reliée à cette dernière, par exemple par une zone courbe, et une quatrième partie rectiligne parallèle aux première et deuxième parties, la quatrième partie étant reliée à la troisième partie, par exemple par une zone courbe, la quatrième partie étant engagée dans l'évidement du plateau de pression, la troisième partie rectiligne venant en appui sur le plot.

Les différentes parties peuvent être déformées ou déplacées les unes par rapport aux autres, dans une certaine mesure, la seconde extrémité du premier organe élastique pouvant présenter une certaine élasticité.

L'extrémité libre du plot est arrondie, oblique ou chanfreinée, le plot du plateau de pression et la seconde extrémité du premier organe élastique étant configurés pour permettre un engagement de ladite seconde extrémité sur ladite extrémité libre du plot ainsi qu'un encliquetage de la partie de liaison de la seconde extrémité dans l'évidement du plot.

L'élasticité de la seconde extrémité du premier organe élastique permet un tel engagement par encliquetage.

Le plateau de pression peut comporter une gorge annulaire dans laquelle est logé le premier organe élastique, le premier organe élastique étant maintenu dans ladite gorge par le diaphragme qui recouvre le premier organe élastique.

La gorge peut présenter une section arrondie, complémentaire à la section arrondie du premier organe élastique par exemple.

La première extrémité du premier organe élastique peut également présenter une forme de crochet et être engagée dans une lumière de l'organe de détection en forme de L. Ladite lumière peut déboucher au niveau de l'extrémité de l'organe de détection qui est tournée en direction du plateau de pression.

Au moins un second organe élastique peut être monté entre l'organe de rattrapage d'usure et l'organe de détection d'usure, l'organe élastique comportant au moins deux bras reliés l'un à l'autre par des moyens élastiques tendant à écarter les deux bras l'un par rapport à l'autre, chaque bras étant apte à coopérer avec l'organe de rattrapage d'usure et/ou l'organe de détection de manière à déplacer l'organe de rattrapage d'usure par rapport à l'organe de détection, par rapprochement et écartement successifs des deux bras.

Le second organe élastique tend alors à écarter ses deux bras, à l'inverse du ressort de traction utilisé dans l'art antérieur qui tend à rapprocher ses deux extrémités. Le second organe élastique est ainsi relativement facile à monter et permet de motoriser, c'est-à-dire de déplacer, l'organe de rattrapage d'usure par rapport à l'organe de détection. L'organe de détection, l'organe de rattrapage et le second organe élastique peut former un sous-ensemble pré-monté, apte à être monté ensuite dans le dispositif d'embrayage.

Chaque bras peut être engagé dans une lumière de l'organe de détection et dans une lumière de l'organe rattrapage d'usure, chaque lumière comportant une portion d'introduction s'étendant perpendiculairement à la direction d'écartement des deux bras et débouchant au niveau d'une extrémité axiale de l'organe correspondant, et une portion de butée s'étendant dans la direction d'écartement des deux bras, chaque bras étant apte à venir en appui sur au moins une extrémité de la portion de butée de la lumière de l'organe de rattrapage d'usure et/ou de la lumière de l'organe de détection.

L'évidement du plateau de pression ou en particulier du plot du plateau de pression peut présenter la forme d'une rainure ou d'une gorge. En variante cet évidement peut être formé par un décrochement ou un épaulement. En particulier, le plateau peut être annulaire, le plot pouvant comportant une surface radialement interne comprenant une première partie cylindrique s'étendant dans le prolongement de la périphérie radialement interne du plateau et une seconde partie s'étendant radialement à l'intérieur de la première partie de façon à former un décrochement ou un épaulement. La seconde extrémité du premier organe élastique peut ainsi venir s'engager au niveau de la première partie de la surface interne du plot et venir en appui sur le décrochement ou l'épaulement correspondant.

Le dispositif d'embrayage peut en outre comporter :
- un diaphragme servant à l'actionnement du plateau de pression entre une position embrayée dans laquelle ledit plateau de pression est poussé contre le disque de friction, et une position débrayée dans laquelle ledit plateau de pression est écarté du disque de friction par l'intermédiaire de moyens de rappel du plateau de pression,
- des moyens de rattrapage de l'usure du disque de friction, intercalés entre le diaphragme et le plateau de pression, lesdits moyens de rattrapage d'usure comportant un organe de rattrapage, mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position de la rampe par rapport à la contre-rampe,
- des moyens de détection de l'usure aptes à autoriser le déplacement dudit organe mobile des moyens de rattrapage d'usure en cas d'usure du disque de friction et aptes à empêcher un tel déplacement lorsque cette usure n'est pas suffisante, lesdits moyens de détection comportant un organe de détection, mobile dans une plage déterminée par rapport à l'organe de rattrapage mobile, et comportant une rampe coopérant avec une contre-rampe tournée du côté du plateau de pression,
- au moins un organe presseur venant contraindre au moins la rampe de l'organe de détection contre la contre-rampe associée, l'organe presseur étant apte à coopérer avec une butée fixe de manière à libérer lesdits organes mobiles lorsqu'une usure du disque de friction est détectée,
l'organe de détection mobile étant sollicité par le premier organe élastique de façon à se déplacer et à rattraper, au moins en partie, le jeu entre celui-ci et l'organe presseur, lorsque ledit organe de détection mobile est libéré par l'organe presseur et par le diaphragme, la première extrémité du premier organe élastique étant reliée à l'organe de détection mobile, l'organe de rattrapage mobile étant sollicité de façon à se déplacer lorsque ledit organe de rattrapage mobile est libéré par le diaphragme.

L'organe de rattrapage d'usure et l'organe de détection peuvent être annulaires ou en forme d'arc de cercle, et concentriques, lesdits organes étant aptes à pivoter l'un par rapport à l'autre.

Les moyens élastiques du second organe élastique peuvent être conçus pour déplacer les deux bras l'un par rapport à l'autre par translation, dans la direction d'écartement ou de rapprochement des bras.

Lesdits moyens élastiques peuvent comporter une portion courbe ou au moins une spire.

Les organes de détection et de rattrapage d'usure peuvent être aptes à pivoter l'un par rapport à l'autre autour d'un axe de pivotement, la portion courbe ou la spire des moyens élastiques pouvant s'étendre dans un plan radial ou dans un plan axial par rapport à l'axe de pivotement.

La portion courbe ou la spire des moyens élastiques du second organe élastique peut être apte à prendre appui radialement sur l'organe de détection, respectivement sur l'organe de rattrapage d'usure, l'extrémité libre de l'un au moins des bras étant apte à prendre appui élastiquement et radialement sur l'organe de rattrapage d'usure, respectivement sur l'organe de détection, de façon à pincer et rapprocher radialement l'organe de rattrapage d'usure et l'organe de détection.

La portion courbe, la spire ou l'un au moins des bras du second organe élastique peut être intercalé radialement entre l'organe de rattrapage de jeu et l'organe de détection.

Chaque bras du second organe élastique peut être est engagé dans une lumière de l'organe de détection et dans une lumière de l'organe rattrapage d'usure, chaque lumière comportant une portion d'introduction s'étendant perpendiculairement à la direction d'écartement des deux bras et débouchant au niveau d'une extrémité axiale de l'organe correspondant, et une portion de butée s'étendant dans la direction d'écartement des deux bras, chaque bras étant apte à venir en appui sur au moins une extrémité de la portion de butée de la lumière de l'organe de rattrapage d'usure et/ou de la lumière de l'organe de détection.

Le diaphragme peut libérer l'organe de détection mobile et empêcher le déplacement de l'organe de rattrapage mobile, en position complètement embrayée, le diaphragme libérant l'organe de rattrapage mobile et empêchant le déplacement de l'organe de détection mobile, en position complètement débrayée, le diaphragme venant toujours en appui sur l'un au moins desdits organes mobiles entre ses positions totalement embrayée et totalement débrayée.

L'organe de détection mobile peut se présenter sous la forme d'un anneau comportant une extrémité apte à venir en appui sur l'organe presseur et sur le diaphragme, et une extrémité comportant au moins une rampe s'étendant circonférentiellement, coopérant avec la contre-rampe associée tournée du côté du plateau de pression.

L'organe de rattrapage mobile peut se présenter sous la forme d'un anneau comportant une extrémité apte à venir en appui sur l'organe presseur et sur le diaphragme, et une extrémité comportant au moins une rampe s'étendant circonférentiellement, coopérant avec la contre-rampe associée tournée du côté du plateau de pression.

Le dispositif d'embrayage peut comporter un couvercle à l'intérieur duquel sont montés, au moins en partie, le plateau de pression et le diaphragme, le diaphragme étant intercalé entre le couvercle et le plateau de pression.

L'invention peut également concerner un double embrayage, caractérisé en ce qu'il comporte au moins un dispositif d'embrayage du type précité.

L'invention peut également concerner un procédé de montage d'un dispositif d'embrayage du type précité, caractérisé en ce que le plateau de pression est annulaire, et en ce que ledit procédé comporte une étape de montage du premier organe élastique lors de laquelle la première extrémité est reliée à l'organe mobile correspondant et lors de laquelle le premier organe élastique est déformé de façon à ce que sa seconde extrémité dépasse circonférentiellement le plot, puis relâché de façon à ce qu'une partie au moins de la seconde extrémité s'engage progressivement dans l'évidement du plot, jusqu'à ce qu'une partie de la seconde extrémité vienne en appui sur une extrémité circonférentielle du plot.

Selon une autre forme de réalisation, le plateau de pression peut être annulaire, ledit procédé pouvant comporter une étape de montage du premier organe élastique lors de laquelle la première extrémité est reliée à l'organe de détection mobile correspondant et lors de laquelle la seconde extrémité du premier organe élastique est engagée axialement sur le plot de façon à ce que ladite seconde extrémité se déforme élastiquement par appui sur une extrémité oblique ou arrondie du plot avant qu'une partie au moins de ladite seconde extrémité s'engage par encliquetage ou par rappel élastique dans l'évidement du plot.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une demi-vue en coupe d'un dispositif d'embrayage selon l'invention,
- la figure 2 est une vue en perspective, avec écorché partiel, du dispositif d'embrayage,
- la figure 3 est une vue éclatée, en perspective et avec écorché partiel, du dispositif d'embrayage,
- la figure 4 est une vue en perspective d'une partie du dispositif d'embrayage,
- la figure 5 est une vue en perspective d'une partie des moyens de rattrapage d'usure équipant le dispositif d'embrayage,
- la figure 6 est une vue en perspective d'un organe élastique du dispositif d'embrayage,
- les figures 7 et 8 sont des vues en perspective illustrant le montage de l'organe élastique de la figure 6,
- les figures 9 et 10 sont des vues en perspective illustrant le montage d'un autre organe élastique du dispositif d'embrayage,
- la figure 11 est une vue illustrant schématiquement le fonctionnement du dispositif d'embrayage, lorsque le plateau de pression, le plateau de réaction et le disque de friction ne sont pas usés, en position embrayée du dispositif d'embrayage,
- la figure 12 est une vue illustrant schématiquement une première étape de fonctionnement du dispositif d'embrayage, en cas d'usure de l'un au moins des éléments précités, en position embrayée du dispositif d'embrayage,
- la figure 13 est une vue illustrant la position des moyens de butée de l'organe de rattrapage mobile par rapport à l'organe détection mobile, dans la première étape de fonctionnement,
- les figures 14 et 15 sont des vues correspondant respectivement aux figures 12 et 13 et illustrant une deuxième étape de fonctionnement,
- la figure 16 est une vue correspondant à la figure 12 et illustrant une troisième étape de fonctionnement,
- la figure 17 est une vue correspondant à la figure 12 et illustrant une quatrième étape de fonctionnement,
- les figures 18 et 19 sont des vues correspondant respectivement aux figures 12 et 13 et illustrant une cinquième étape de fonctionnement,
- les figures 20 à 22 représentent différentes étapes du montage d'une extrémité de l'organe élastique des figures 9 et 10 sur le plateau de pression, selon une forme de réalisation,
- les figures 23 à 25 représentent différentes étapes du montage d'une extrémité de l'organe élastique des figures 9 et 10 sur le plateau de pression, selon une autre forme de réalisation,
- la figure 26 est une vue correspondant à la figure 25, illustrant une variante de réalisation.

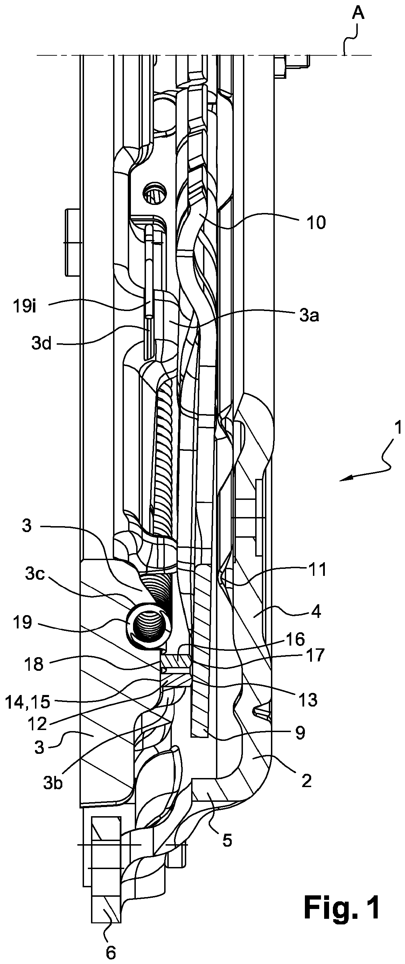

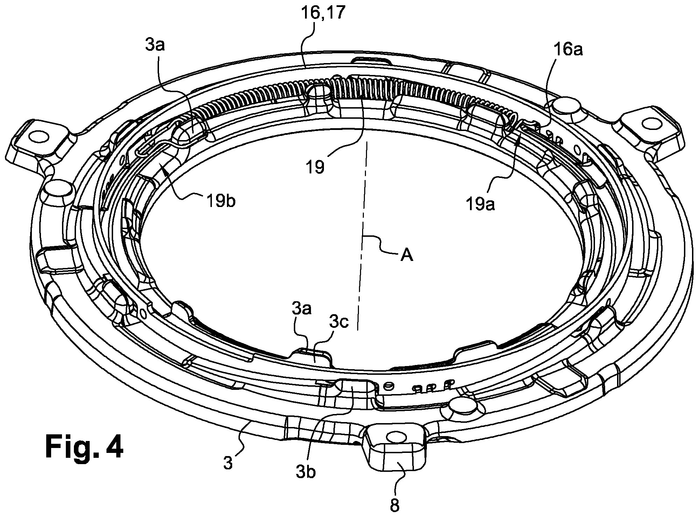

Un dispositif d'embrayage 1, notamment pour véhicule automobile, selon une forme de réalisation de l'invention est illustré aux figures 1 à 4, et comporte un couvercle 2 en forme de cloche, d'axe A, à l'intérieur duquel est monté un plateau de pression 3 destiné à venir en appui sur un disque de friction du dispositif d'embrayage.

Le couvercle 2 comporte une partie annulaire 4 s'étendant radialement, une partie périphérique radialement externe 5, s'étendant vers l'arrière, comportant des pattes radiales ou un rebord radial 6 permettent la fixation du couvercle 2 à un organe axialement fixe du dispositif d'embrayage et dont d'autres permettent la fixation de languettes élastiques 7.

Plus particulièrement, plusieurs groupes de languettes 7 empilées les unes sur les autres peuvent être fixés entre le couvercle 2 et le plateau de pression 3. Chaque languette 7 d'un même groupe est alors fixée au rebord 6 du couvercle 2, à une première extrémité, et à des pattes 8 du plateau de pression 3, à une seconde extrémité. Cette fixation est assurée par l'intermédiaire de rivets.

De cette manière, le plateau de pression 3 est soumis à un effort de rappel important, compris par exemple entre 0 et 600 N, (dans le cas d'un véhicule de tourisme) ou compris entre 0 et 2000 N (dans le cas d'un véhicule industriel), dirigé axialement vers l'avant. Le plateau de pression 3 est ainsi rappelé vers une position dite de débrayage, dans laquelle il est écarté du disque de friction.

Un diaphragme 9 est intercalé axialement entre le couvercle 2 et le plateau de pression 3 et sert à l'actionnement du plateau de pression 3 entre une position totalement embrayée dans laquelle ledit plateau de pression 3 est poussé contre le disque de friction, et une position totalement débrayée dans laquelle ledit plateau de pression 3 est écarté du disque de friction par l'intermédiaire des languettes élastiques 7.

Le diaphragme 9 est annulaire et comporte, à sa périphérie radialement interne, des doigts 10 s'étendant radialement vers l'intérieur. Ces doigts 10 sont destinés à coopérer avec une butée d'embrayage, comme cela est bien connu en soi.

Le mécanisme d'embrayage est de type normalement fermé.

Le diaphragme 9 prend en outre appui sur des zones 11 en saillie du couvercle, de manière à ce qu'il se déforme et pivote autour desdites zones 11, en fonctionnement.

Des moyens de rattrapage d'usure et de détection sont intercalés axialement entre le plateau de pression et le diaphragme. Plus particulièrement, le diaphragme 9 vient coopérer avec lesdits moyens de rattrapage d'usure et de détection dans une zone située radialement à l'extérieur des zones d'appui 11 du couvercle 2.

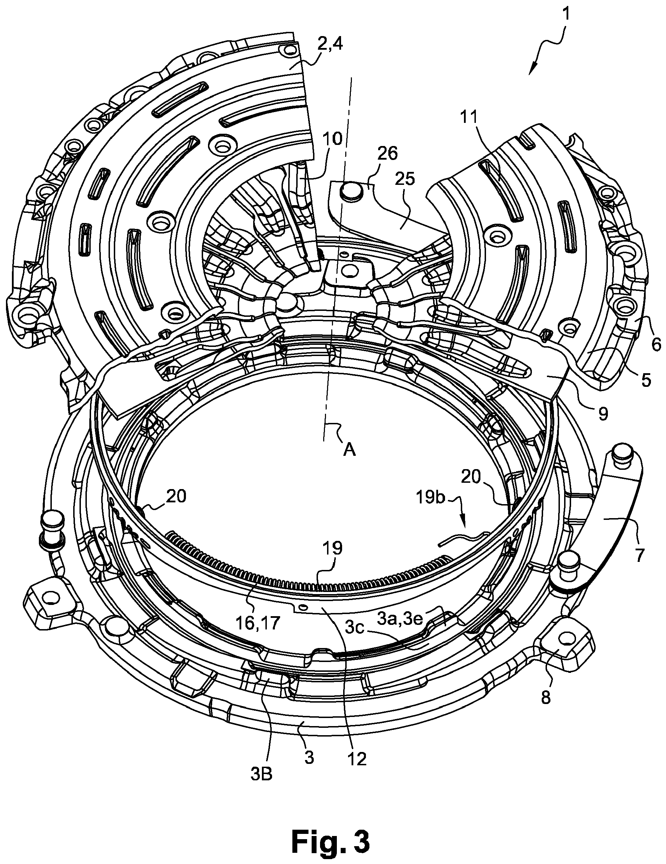

Ces moyens comportent un organe de rattrapage mobile 12 se présentant sous la forme d'un anneau comportant une extrémité 13 (figure 3) contre laquelle le diaphragme 9 est apte à venir en appui, et une extrémité comportant au moins une rampe 14 s'étendant circonférentiellement, coopérant avec une contre-rampe associée 15 ménagée directement sur le plateau de pression 3.

Les moyens précités comportent également un organe de détection 16 mobile se présentant sous la forme d'un anneau comportant une extrémité 17 contre laquelle le diaphragme est apte à venir en appui, et une extrémité comportant au moins une rampe 18 s'étendant circonférentiellement, coopérant avec la contre-rampe 15 du plateau de pression 3.

A titre d'exemple, l'angle des rampes 14, 18 desdits organes mobiles 12, 16 et de la contre-rampe 15 du plateau de pression 3 est compris entre 2 et 20°.

Les deux organes mobiles 12, 16 sont concentriques. Dans la forme de réalisation représentée aux figures, l'organe de détection mobile 16 est situé radialement à l'intérieur de l'organe de rattrapage mobile 12. En variante, les positions respectives desdits organes mobiles 12, 16 peuvent être inversées, notamment, dans le cas d'un embrayage normalement ouvert.

L'un des organes mobiles 12, 16 est inscrit dans l'espace radialement interne de l'autre organe mobile 16, 12.

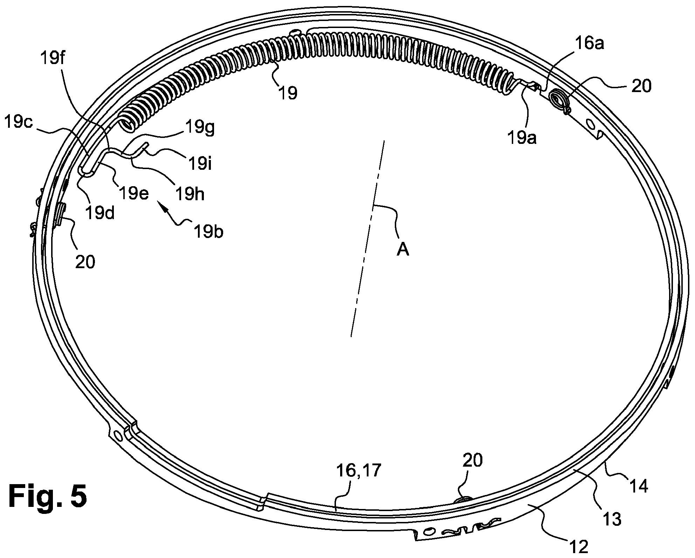

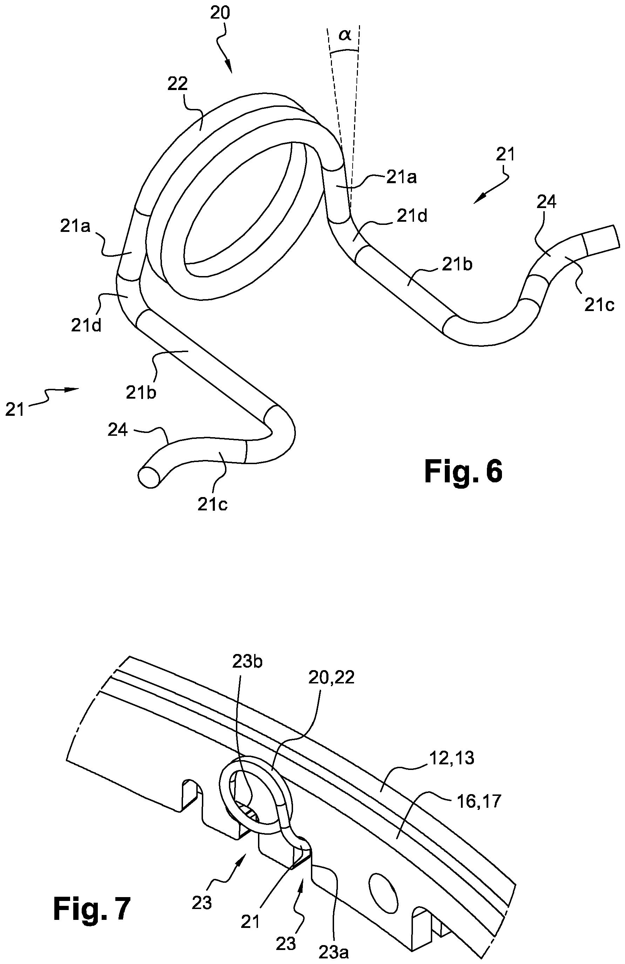

Un premier organe élastique se présentant sous la forme d'un ressort de traction 19 (figures 5 et 6) s'étendant circonférentiellement est monté entre l'organe de détection 16 et le plateau de pression 3. On rappelle que le plateau de pression 3 est couplé en rotation au couvercle 2, par l'intermédiaire des languettes élastiques 7. La longueur du ressort 19 est dimensionnée de façon à pouvoir solliciter le déplacement de l'organe de détection 16 sur une grande plage angulaire (par exemple de l'ordre de 120°).

Le premier organe élastique 19 comporte une première extrémité 19a formant un crochet, une seconde extrémité 19b formant également un crochet, et une partie centrale comprenant un enroulement de spires.

A l'état libre ou de repos, c'est-à-dire lorsqu'aucune contrainte mécanique n'est appliquée, le premier organe élastique est droit. Les spires enroulées sont alors jointives, c'est-à-dire en appui les unes sur les autres.

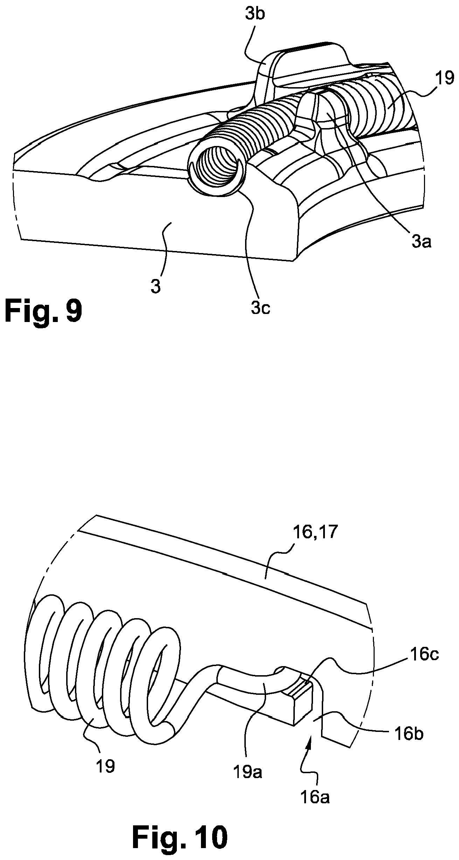

Comme cela est visible à la figure 10, L'extrémité 19a est engagée dans une ouverture 16a en forme générale de L ménagée dans l'organe de détection, de manière à ce que l'extrémité 19a soit maintenue en appui contre le fond de ladite ouverture 16a. Plus particulièrement, comme cela est mieux visible à la figure 10, l'ouverture 16a comporte une portion d'introduction 16b s'étendant axialement et débouchant au niveau de l'extrémité de l'organe 16 qui est tournée vers le plateau de pression 3. L'ouverture 16a comporte en outre une portion de butée 16c s'étendant circonférentiellement depuis la partie 16b. Le fond de l'ouverture 16a étant formé par l'extrémité de la portion de butée 16c qui n'est pas reliée à la portion d'introduction 16b.

Par ailleurs, comme cela est visible à la figure 5, la seconde extrémité 19b de l'organe élastique 19 présente une première partie rectiligne 19c prolongeant l'organe élastique, une seconde partie rectiligne 19e, située radialement à l'intérieur de de la partie 19c et parallèle à cette dernière, les parties rectilignes étant reliées par une partie courbe 19d, une troisième partie rectiligne 19g s'étendant radialement, c'est-à-dire s'étendant sensiblement perpendiculairement à la partie rectiligne 19e et reliée à cette dernière par une zone courbe 19f, et une quatrième partie rectiligne 19i parallèle aux parties 19c, 19e, la partie rectiligne 19i étant reliée à la partie rectiligne 19g par une zone courbe 19h.

Les extrémités 19a et 19b sont formées par pliage d'un fil de section ronde. Bien entendu, les extrémités 19a, 19b peuvent présenter d'autres formes et/ou d'autres sections.

Le plateau de pression comporte des plots 3a s'étendant axialement et situés sur une même circonférence et des plots 3b, s'étendant axialement et situés sur une autre circonférence. Les plots 3b sont situés radialement à l'extérieur par rapport aux plots 3a. Le plateau de pression comporte en outre une gorge annulaire 3c, délimitée radialement à l'intérieur notamment par les plots 3a, l'organe élastique 19 étant logé dans ladite gorge annulaire. Ladite gorge annulaire 3c présente une section arrondie de forme complémentaire à la section de l'organe élastique 19.

L'organe élastique 19 est maintenu axialement dans la gorge 3c par le diaphragme 9 qui recouvre l'organe élastique 19. De cette manière, on maintient axialement et radialement l'organe élastique 19 en position dans la gorge 3c, même lorsque l'organe élastique 19 est soumis à des efforts et/ou à des vibrations en fonctionnement.

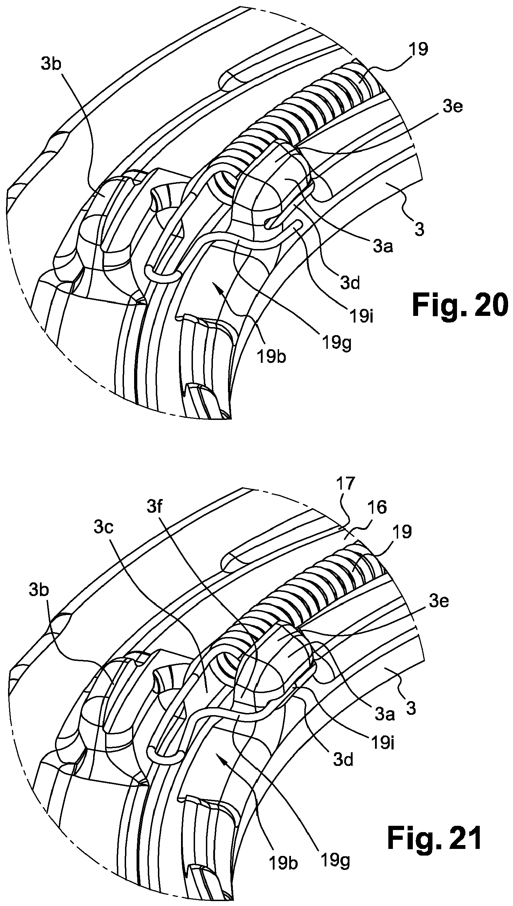

Comme cela est mieux visible aux figures 20 à 22 par exemple, l'un des plots 3a comporte une face latérale radialement interne présentant un évidement 3d se présentant sous la forme d'une rainure ou d'une gorge s'étendant circonférentiellement et servant à l'introduction de la partie rectiligne 19i de l'extrémité 19b de l'organe élastique 19. Par ailleurs, la partie rectiligne radiale 19g prend appui sur l'extrémité circonférentielle correspondante du plot 3a correspondant.

L'extrémité 19b est ainsi maintenue axialement et radialement en position par rapport au plot 3a correspondant. On notera également que l'extrémité libre 3e du plot 3a peut être arrondie, oblique par rapport au plan axial, ou chanfreinée, pour des raisons de montage qui seront détaillées plus loin.

La rainure ou gorge 3d peut être réalisée par usinage, par exemple en même temps que la surface du disque de pression 3 qui est destinée à frotter contre le disque de friction.

Des seconds organes élastiques 20 sont montés chacun entre l'organe de détection 16 et l'organe de rattrapage 12.

Les seconds organes élastiques 20 sont par exemple au nombre de trois et sont régulièrement répartis sur toute la périphérie. Comme cela est mieux visible à la figure 6, chaque second organe élastique 20 est formé d'un fil de section ronde et comporte deux bras 21 reliés l'un à l'autre par des moyens élastiques tendant à écarter les deux bras l'un par rapport à l'autre. Chaque organe élastique 20 est réalisé à partir de fil d'acier, de type acier à ressort. La section du fil peut également être carrée, de façon à augmenter la surface d'appui afin de réduire l'usure des surfaces en contact avec les organes mobiles.

Les moyens élastiques comportent des spires 22, ici 2,5 spires, les spires 22 s'étendant globalement dans un plan parallèle à l'axe des organes de rattrapage et de détection 12, 16. Les spires 22 tendent à écarter les bras l'un de l'autre, lorsqu'elles sont sollicitées.

Chaque bras 21 comporte une partie proximale 21 a, reliée à l'une des extrémités des spires, une partie distale 21 c, et une partie médiane 21 b s'étendant entre les parties proximale et distale 21 a, 21 c. Les parties proximales 21 a des deux bras 21 s'étendent chacune dans un plan radial en formant un angle α compris entre - 45° et 45° par rapport à l'axe A. Les parties proximales 21a s'écartent l'une de l'autre en direction du plateau de pression 3, c'est-à-dire vers le bas à la figure 6. Les parties médianes 21 b sont parallèles l'une par rapport à l'autre et s'étendent dans un plan radial, globalement perpendiculaire au plan des spires 22 et des parties proximales 21 a. Les parties médianes 21 b sont reliées aux parties proximales 21a par des zones courbes 21 d. Les parties distales 21 c s'étendent dans un plan globalement radial depuis les parties médianes 21 b, à l'opposé l'une de l'autre. Chaque partie distale 21 c présente une forme générale en S.

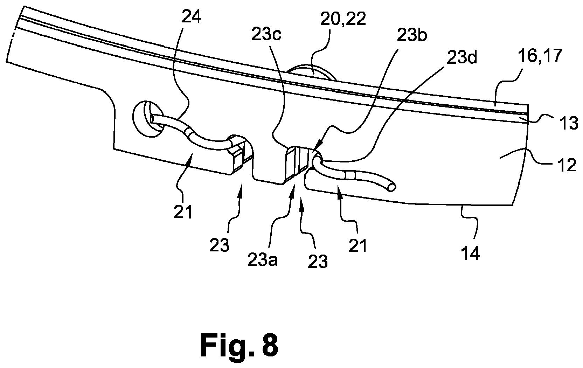

L'organe de rattrapage 12 et l'organe de détection 16 comportent chacun deux lumières 23 (figures 7, 8) associées à chaque second organe élastique 20. Dans le cas illustré aux figures, chaque organe 12, 16 comporte donc trois paires de lumières 23.

Chaque lumière 23 comporte une portion d'introduction 23a débouchant au niveau de l'extrémité de l'organe correspondant 12, 16 qui est tournée en direction du plateau de pression 3. La portion d'introduction 23a s'étend axialement. Chaque lumière 23 comporte en outre une portion de butée 23b s'étendant circonférentiellement depuis l'extrémité de la portion d'introduction 23a qui est opposée au plateau de pression 3. Les portions de butée 23b des deux lumières 23 d'une même paire s'étendent à l'opposé l'une de l'autre, depuis la portion d'introduction 23a correspondante. Chaque portion de butée 23b comporte une extrémité dite proximale 23c (figure 8), au niveau de laquelle la portion de butée 23b et la portion d'introduction 23a se rejoignent, et une extrémité opposée 23d dite distale. L'extrémité proximale 23c se présente sous la forme d'une surface plane s'étendant axialement, l'extrémité distale 23d se présentant sous la forme d'une surface hémicylindrique, par exemple, de diamètre égal ou supérieur au diamètre du fil du second organe élastique 20 correspondant.

Les portions médianes 21 b des bras 21 viennent en appui sur les extrémités distales 23d des portions de butée 23b des lumières 23.

Lorsque les portions médianes 21 b des bras 21 viennent en appui sur les extrémités distales 23d des portions de butée 23b des lumières 23, la spire 22 radialement externe peut prendre appui sur la surface radialement interne de l'organe de détection 16 et les portions distales 21 c peuvent prendre appui, au niveau de la zone convexe 24 (figures 6 et 8) de chaque portion distale 21 c, sur la surface radialement externe de l'organe de rattrapage 12. Les portions distales 21 c exercent un effort de pincement tendant à rapprocher l'organe de rattrapage 12 de l'organe de détection 16. Les seconds organes élastiques 20 permettent ainsi le montage et le maintien en position d'un sous-ensemble formé au moins par l'organe de détection 16, l'organe de rattrapage 12 et les seconds organes élastiques 20. Par ailleurs, compte tenu de la forme en L des lumières 23, les seconds organes élastiques 20 sont montés de façon imperdable dans lesdites lumières 23. Enfin, les extrémités ouvertes des lumières 23 sont refermées par appui sur le plateau de pression 3, de sorte que, après montage des organes de rattrapage 12 et de détection 16 entre le diaphragme 9 et le plateau de pression 3, on évite tout retrait accidentel des bras 21 des seconds organes élastiques 20 hors des lumières correspondantes 23.

Compte tenu du nombre et du positionnement des seconds organes élastiques 20 (trois organes élastiques 20 décalés angulairement de 120°), ces derniers tendent ainsi à maintenir co axiaux l'organe de rattrapage 12 et l'organe de détection 16. A cet effet également, les efforts de pincement exercés par les différents organes élastiques sont sensiblement identiques.

Compte tenu du diamètre de l'organe de détection 16 et de l'organe de rattrapage 12, un jeu radial existe entre ces deux organes 12, 16, de manière à éviter tout frottement entre eux en fonctionnement.

Les plots 3b du plateau de pression forment des moyens de centrage du sous-ensemble comportant au moins l'organe de détection 16, l'organe de rattrapage 12 et les seconds organes élastiques 20. En particulier, les plots 3b sont situées radialement à l'extérieur dudit sous-ensemble, c'est-à-dire radialement à l'extérieur de l'organe de rattrapage 12.

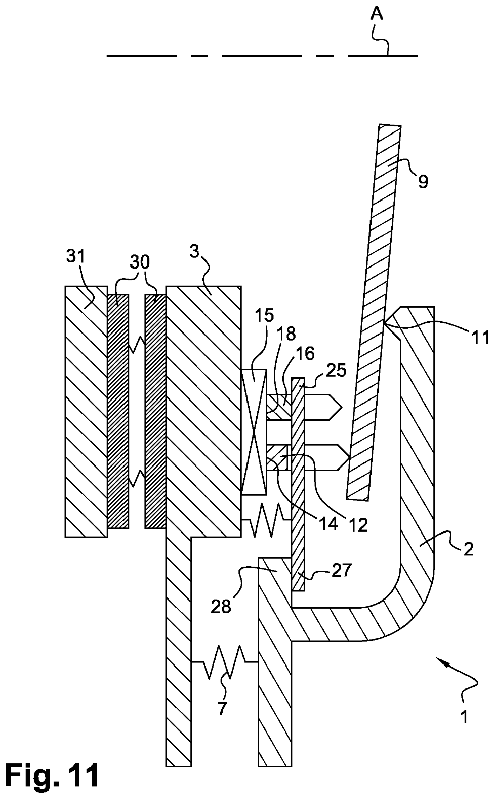

Le dispositif 1 comporte également un organe presseur 25 se présentant sous la forme d'une languette élastique exerçant un effort axial. Ladite languette est fixée par rivetage au plateau de pression 3, à une première extrémité 26, et vient en appui, à une seconde extrémité 27, sur l'extrémité correspondante 17 de l'organe de détection 16, de façon à le contraindre en appui sur le plateau de pression 3. Un jeu est formé axialement entre la seconde extrémité 27 de la languette 25 et l'organe de rattrapage 12, comme cela est mieux visible à la figure 11.

La seconde extrémité 27 de la languette 25 est apte à coopérer avec une butée fixe 28 (figure 11, par exemple), ici une butée du couvercle 2, lorsque le déplacement du plateau de pression 3 est important, c'est-à-dire lorsqu'il existe une usure importante des garnitures du disque de friction et/ou des contre-matériaux des plateaux de pression et de réaction.

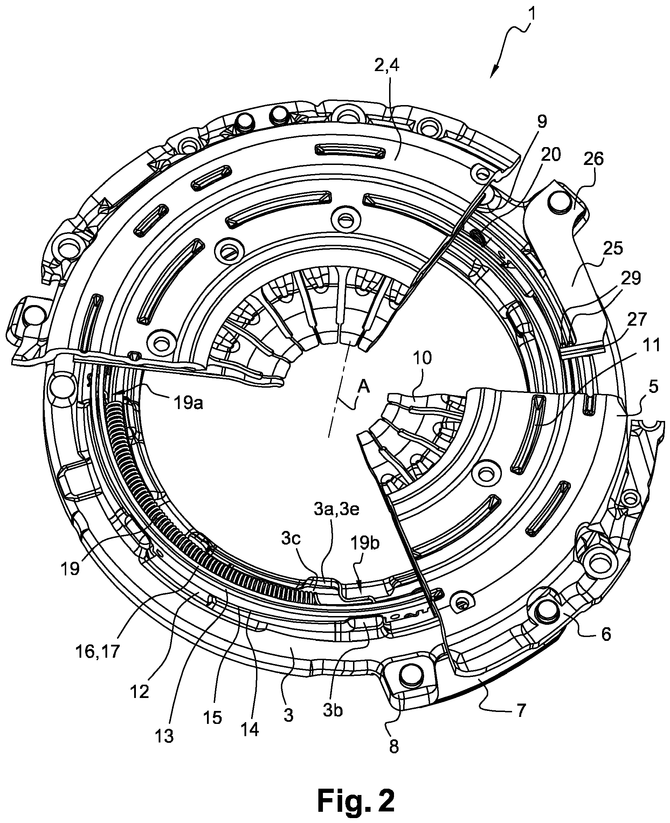

Comme cela est visible à la figure 2 notamment, cette seconde extrémité 27 de la languette 25 forme également une butée angulaire, destinée à coopérer avec des surfaces radiales 29 des organes mobiles 12, 16, de manière à assurer le bon positionnement angulaire desdits organes mobiles 12, 16 avant montage de l'ensemble sur le reste du dispositif d'embrayage 1. Cette butée angulaire n'intervient pas après montage. Cette butée peut toutefois être utilisée en tant que butée de fin de vie.

Comme cela est illustré schématiquement à la figure 11, les moyens de rattrapage et de détection d'usure sont inopérants lorsque les garnitures 30 du disque de friction 31 ne sont pas ou peu usées et que les contre-matériaux des plateaux de pression 3 et de réaction associés ne sont pas usés, par exemple lorsque l'usure axiale cumulée est inférieure à 0,05 mm.

En position totalement embrayée notamment, illustrée à la figure 11, le diaphragme 9 vient en appui sur l'organe de rattrapage 12, de façon à repousser le plateau de pression 3 à l'encontre des languettes élastiques de rappel 7. Le plateau de pression 3 et le plateau de réaction correspondant (axialement fixe) enserrent alors le disque de friction 31 portant les garnitures.

Dans cette position, la seconde extrémité 27 de la languette 25 affleure la butée 28 du couvercle 2. En d'autres termes, en l'absence d'usure prononcée, la languette 25 et/ou le diaphragme 9 maintiennent l'organe de détection 16 et l'organe de rattrapage 12 en appui sur le plateau de pression 3, quelle que soit la phase de fonctionnement du dispositif d'embrayage (embrayage/débrayage). Dans ce cas, le couple résistant généré par le frottement entre lesdits organes 12, 16 et le plateau de pression 3 est supérieur au couple exercé par les ressorts 19. Lesdits organes 12, 16 sont donc immobilisés en rotation par rapport au plateau de pression 3, quelle que soit la phase de fonctionnement du dispositif d'embrayage.

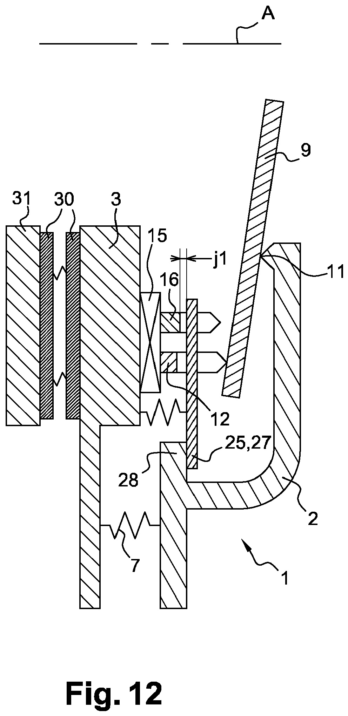

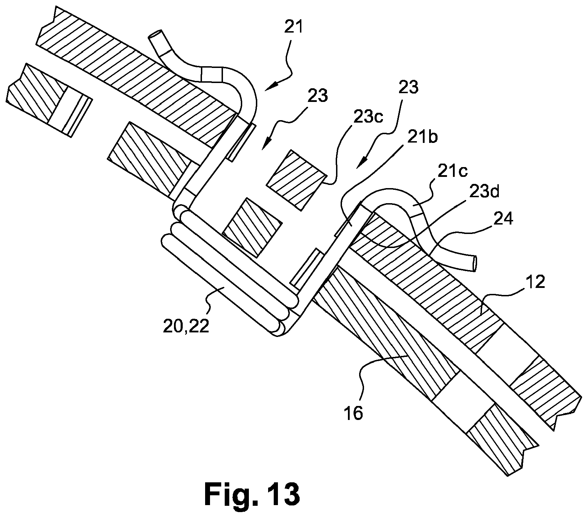

Les figures 12 à 19 illustrent le cas où les garnitures 30 du disque de friction 31 (ou encore les contre-matériaux des plateaux de pression 3 et de réaction) présentent une usure importante, qu'il est nécessaire de rattraper afin d'éviter un disfonctionnement du dispositif d'embrayage.

Dans ce cas, comme illustré à la figure 12, la seconde extrémité 27 de la languette 25 vient en appui sur la butée 28 du couvercle 2, en position complètement embrayée, et se décolle de l'extrémité correspondante de l'organe de détection 16. Un jeu j1 se forme donc entre ladite extrémité de l'organe de détection 16 et la seconde extrémité 27 de la languette 25.

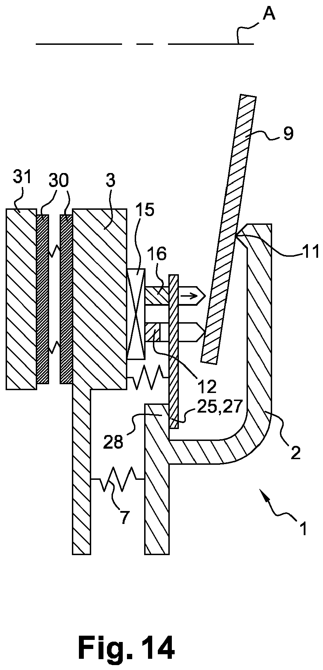

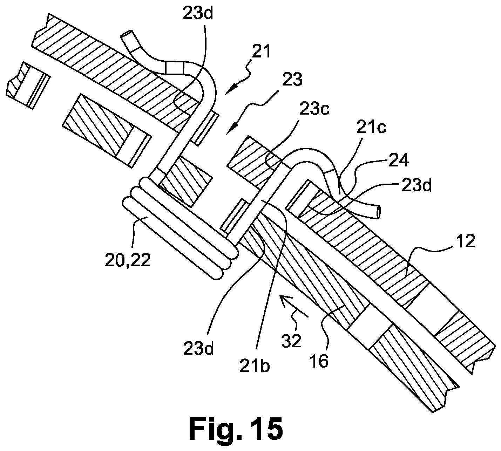

L'organe de détection 16, qui n'est alors plus soumis à un effort axial, est entraîné en rotation par le premier organe élastique 19, dans le sens représenté par la flèche 32 à la figure 15, de façon à combler au moins partiellement le jeu j1 (figure 14). Lors de la rotation de l'organe de détection 16, la portion médiane 21 b de l'un des bras 21 est en appui sur l'extrémité distale 23d de la portion de butée 23b d'une lumière 23 de l'organe de détection 16 (figure 15) et la portion médiane 21 b de l'autre bras 21 est en appui sur l'extrémité distale 23d d'une lumière opposée de l'organe de rattrapage 12. Ainsi, lors d'une telle rotation, les deux bras 21 sont rapprochés l'un de l'autre, de manière à contraindre les spires 22.

La rotation de l'organe de détection 16 est stoppée lorsque l'extrémité correspondante de l'organe de détection 16 vient à nouveau en appui sur la seconde extrémité 27 de la languette 25 (faible jeu à rattraper) ou lorsque la portion médiane 21 b du bras précité vient en appui sur l'extrémité proximale 23c de la lumière 23 de l'organe de rattrapage 12 (figure 15) ou lorsque le jeu J2 est comblé.

On notera que, durant cette phase, l'organe de rattrapage 12 est maintenu en appui sur le plateau de pression 3 par le diaphragme 9. Il est donc immobilisé en rotation par rapport au plateau de pression 3.

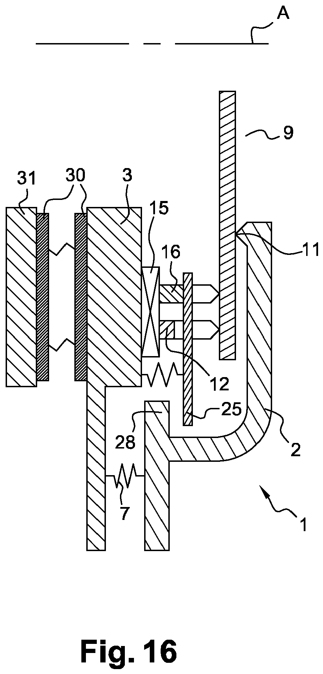

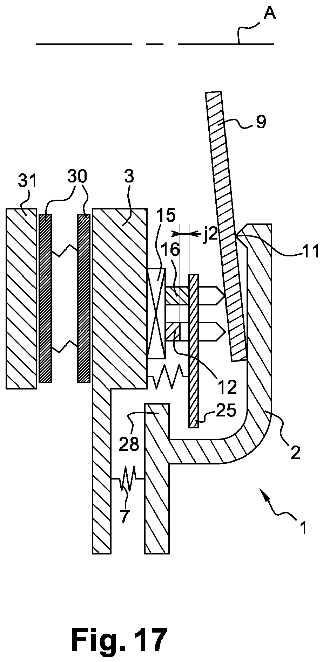

Lors de la phase de débrayage suivante, le diaphragme 9 transfère son appui de l'organe de rattrapage 12 vers l'organe de détection 16. Les figures 16 et 17 sont des vues illustrant les positions de ces éléments lors d'un tel transfert. Lors d'un tel débrayage, le plateau de pression 3 est écarté du plateau de réaction par l'intermédiaire des languettes de rappel 7 correspondantes, de manière à libérer le disque de friction 31.

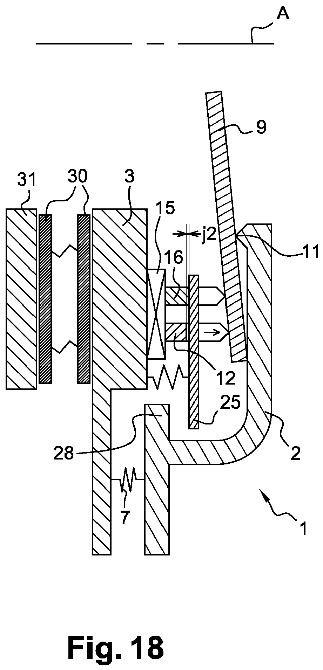

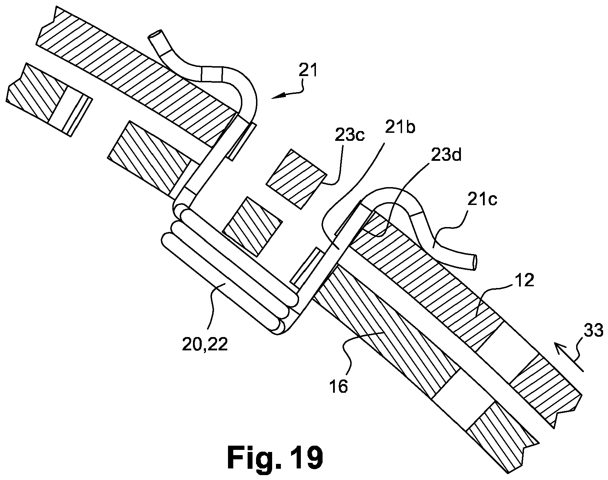

Comme illustré aux figures 18 et 19, lorsque le diaphragme 9 est en position totalement débrayée, il libère totalement l'organe de rattrapage 12. Dans cette position, l'organe de détection 16 est maintenu fixe en rotation par appui sur le diaphragme 9 et sur le plateau de pression 3, sous l'effet des languettes de rappel 7. Par ailleurs, la languette 25 est écartée de la butée 28 et de l'organe de rattrapage 12.

L'organe de rattrapage 12, contraint par les organes élastiques 20, est donc entraîné en rotation dans le sens de rotation indiqué par la flèche 33 à la figure 19 de manière à combler tout ou partie du jeu j2 entre ledit organe de rattrapage 12 et la languette 25 (figures 18 et 19).

Le pivotement de l'organe de rattrapage 12 et de l'organe de détection 16 par rapport au plateau de pression 3 permet, par l'intermédiaire des rampes 14, 18 et de la contre-rampe 15, d'augmenter la distance axiale entre le plateau de pression 3 et la zone d'appui du diaphragme 9 sur lesdits organes 12, 16, ce qui permet de compenser progressivement l'usure des garnitures 30 du disque de friction 31 et/ou l'usure des contre-matériaux des plateaux de pression 3 et de réaction.

Le dispositif permet également de conserver l'angle de fonctionnement du diaphragme 9, de manière à maintenir un effort de précharge constant et réduire les contraintes mécaniques.

On notera que l'un des organes de rattrapage 12 ou de détection 16 peut être soumis à une accélération tangentielle due par exemple à un acyclisme non maîtrisé du moteur thermique ou à un choc dans la transmission de couple. Dans un tel cas, les bras 21 et les surfaces de butée 23c, 23d empêchent un déplacement angulaire trop important de l'un des organes 12, 16 par rapport à l'autre.

Les figures 20 à 22 illustrent les étapes de montage de l'extrémité 19b de l'organe élastique 19, sur le plot 3a correspondant.

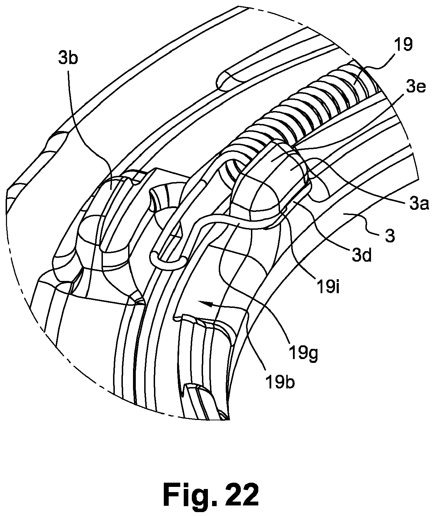

Pour cela, un opérateur tire sur l'extrémité 19b à l'aide d'un outil, de façon à ce que l'extrémité 19b dépasse circonférentiellement le plot 3b (figure 20). Il relâche ensuite ladite extrémité 19b. Lors de la contraction de l'organe 19b, la partie rectiligne 19i vient s'engager progressivement dans la rainure ou la gorge 3d du plot 3a (figure 21), jusqu'à ce que la partie 19g vienne en appui contre l'extrémité circonférentielle correspondante 3f du plot 3a (figure 22).

Comme indiqué précédemment, dans cette position, l'extrémité 19b de l'organe élastique 19 est maintenue axialement et radialement en position, même si cet organe élastique 19 est soumis à des efforts et/ou à des vibrations en fonctionnement.

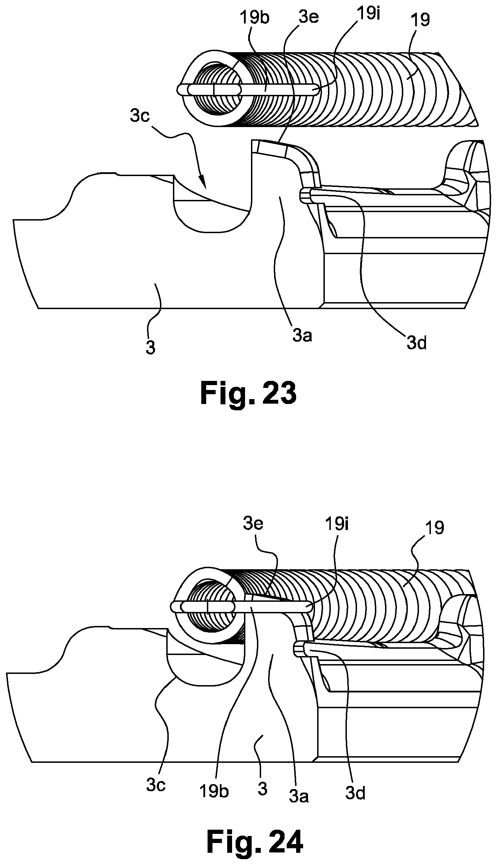

Les figures 23 à 25 représentent les étapes d'une autre technique de montage de l'extrémité 19b de l'organe élastique 19, sur le plot 3a correspondant. Dans cette forme de réalisation, le plot 3a comporte une extrémité 3e arrondie, oblique par rapport au plan axial, ou chanfreinée.

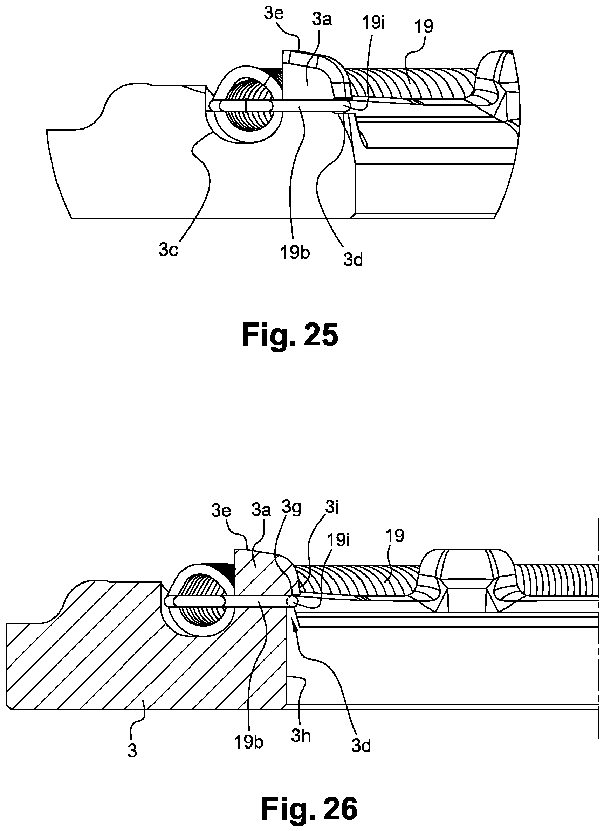

Dans ce cas, l'extrémité 19b est engagée axialement sur le plot 3a, de sorte que la partie 19i vient en appui sur la surface arrondie ou oblique 3e du plot 3a (figure 23 et 24), avant de venir s'engager par encliquetage ou par rappel élastique dans la gorge 3d (figure 25). Pour cela, l'extrémité 19b est déformée dans une certaine mesure, du fait de son élasticité. La position définitive de l'extrémité 19b est similaire à la position décrite précédemment en référence à la figure 22. La partie rectiligne 19i est engagée dans la rainure ou la gorge 3d du plot 3a.

Dans les deux cas, l'organe élastique 19 est ainsi monté de façon imperdable sur le plot 3a.

On notera que le montage de l'extrémité 19b de l'organe élastique 19 sur le plot 3a correspondant peut être réalisé avant ou après montage de l'extrémité 19a sur l'organe de détection 16.

La figure 26 illustre une variante de réalisation, qui diffère de celle illustrée aux figures 23 à 25 en ce que l'évidement 3d du plot 3a du plateau de pression 3 est formé par un décrochement 3g ou un épaulement du plot 3a. En particulier, le plot 3a comporte une surface radialement interne comprenant une première partie 3h cylindrique s'étendant dans le prolongement de la périphérie radialement interne du plateau 3 et une seconde partie 3i s'étendant radialement à l'intérieur de la première partie 3h de façon à former le décrochement ou l'épaulement 3g. La seconde extrémité 19b, en particulier la partie 3i, du premier organe élastique 19 vient ainsi s'engager au niveau de la première partie 3h de la surface interne du plot 3a et vient en appui sur le décrochement ou l'épaulement 3g correspondant.

## Revendications

1. Dispositif d'embrayage (1), notamment pour véhicule automobile, comportant
un plateau de pression (3) destiné à venir en appui sur un disque de friction (31) du dispositif d'embrayage,
des moyens de détection et de rattrapage de l'usure du disque de friction comportant au moins un organe de détection mobile (16) comportant une rampe (18) coopérant avec une contre-rampe (15) tournée du côté du plateau de pression (3),
l'organe de détection mobile (16) étant sollicité par un premier organe élastique (19) de façon à déplacer la rampe (14) par rapport à la contre-rampe (15), le premier organe élastique (19) comportant une première extrémité (19a) reliée à l'organe de détection mobile (16) et une seconde extrémité (19b) reliée au plateau de pression (3),
**caractérisé en ce que** la seconde extrémité (19b) du premier organe élastique (19) comporte une partie de liaison (19i) engagée dans un évidement (3d) du plateau de pression (3).

2. Dispositif d'embrayage (1) selon la revendication 1, **caractérisé en ce que** la seconde extrémité (19b) du premier organe élastique (19) présente une forme de crochet.

3. Dispositif d'embrayage (1) selon la revendication 2, **caractérisé en ce que** l'évidement (3d) est formé dans un plot (3a) du plateau de pression (3), la seconde extrémité (16b) en forme de crochet étant montée sur le plot (3a).

4. Dispositif d'embrayage (1) selon la revendication 3, **caractérisé en ce que** la seconde extrémité du premier organe élastique présente une première partie rectiligne (19c), une deuxième partie rectiligne (19e), située radialement à l'intérieur de la première partie (19c) et parallèle à cette dernière, les première et deuxième parties étant reliées par exemple par une partie courbe (19d), une troisième partie (19g), par exemple rectiligne, s'étendant radialement, c'est-à-dire s'étendant sensiblement perpendiculairement à la deuxième partie (19e) et reliée à cette dernière, par exemple par une zone courbe (19f), et une quatrième partie rectiligne (19i) parallèle aux première et deuxième parties (19c, 19e), la quatrième partie (19i) étant reliée à la troisième partie (19g), par exemple par une zone courbe (19h), la quatrième partie (19i) étant engagée dans l'évidement (3d) du plateau de pression (3), la troisième partie rectiligne (19g) venant en appui sur le plot (3a).

5. Dispositif d'embrayage (1) selon la revendication 3 ou 4, **caractérisé en ce que** l'extrémité libre (3e) du plot (3a) est arrondie, oblique ou chanfreinée, le plot (3a) du plateau de pression (3) et la seconde extrémité (19b) du premier organe élastique (19) étant configurés pour permettre un engagement de ladite seconde extrémité (19b) sur ladite extrémité libre (3e) du plot ainsi qu'un encliquetage de la partie de liaison (19i) de la seconde extrémité (19b) dans l'évidement (3d) du plot (3a).

6. Dispositif d'embrayage (1) selon l'une des revendications 1 à 5, **caractérisé en ce que** l'évidement du plateau de pression est formé par un décrochement ou un épaulement.

7. Dispositif d'embrayage (1) selon l'une des revendications 1 à 6, **caractérisé en ce que** le plateau de pression comporte une gorge annulaire (3c) dans laquelle est logé le premier organe élastique (19), le premier organe élastique (19) étant maintenu dans ladite gorge (3c) par le diaphragme (9) qui recouvre le premier organe élastique (19).

8. Dispositif d'embrayage (1) selon l'une des revendications 1 à 7, **caractérisé en ce qu'**il comporte en outre
un diaphragme (9) servant à l'actionnement du plateau de pression (3) entre une position embrayée dans laquelle ledit plateau de pression (3) est poussé contre le disque de friction, et une position débrayée dans laquelle ledit plateau de pression (3) est écarté du disque de friction par l'intermédiaire de moyens (7) de rappel du plateau de pression (3),
des moyens de rattrapage de l'usure du disque de friction, intercalés entre le diaphragme (9) et le plateau de pression (3), lesdits moyens de rattrapage d'usure comportant un organe de rattrapage (12), mobile dans une plage déterminée et comportant une rampe (14) coopérant avec une contre-rampe (15) tournée du côté du plateau de pression (3), de façon à ajuster la distance entre le diaphragme (9) et le plateau de pression (3) et compenser l'usure du disque de friction en fonction de la position de la rampe (14) par rapport à la contre-rampe (15),
des moyens de détection de l'usure aptes à autoriser le déplacement dudit organe mobile (12) des moyens de rattrapage d'usure en cas d'usure du disque de friction et aptes à empêcher un tel déplacement lorsque cette usure n'est pas suffisante, lesdits moyens de détection comportant un organe de détection (16), mobile dans une plage déterminée par rapport à l'organe de rattrapage mobile (12), et comportant une rampe (18) coopérant avec une contre-rampe (15) tournée du côté du plateau de pression (3),
au moins un organe presseur (25) venant contraindre au moins la rampe (18) de l'organe de détection (16) contre la contre-rampe (15) associée, l'organe presseur (25) étant apte à coopérer avec une butée fixe (28) de manière à libérer lesdits organes mobiles (12, 16) lorsqu'une usure du disque de friction est détectée,
l'organe de détection mobile (16) étant sollicité par le premier organe élastique (19) de façon à se déplacer et à rattraper, au moins en partie, le jeu (j1) entre celui-ci et l'organe presseur (25), lorsque ledit organe de détection mobile (16) est libéré par l'organe presseur (25) et par le diaphragme (9), la première extrémité (19a) du premier organe élastique étant reliée à l'organe de détection mobile (16),
l'organe de rattrapage mobile (12) étant sollicité de façon à se déplacer lorsque ledit organe de rattrapage mobile (12) est libéré par le diaphragme (9).

9. Dispositif d'embrayage (1) selon la revendication 8, **caractérisé en ce que** l'organe de rattrapage d'usure (12) et l'organe de détection (16) sont annulaires ou en forme d'arc de cercle, et concentriques, lesdits organes (12, 16) étant aptes à pivoter l'un par rapport à l'autre.

10. Dispositif d'embrayage (1) selon la revendication 8 ou 9, **caractérisé en ce que** le diaphragme (9) libère l'organe de détection mobile (16) et empêche le déplacement de l'organe de rattrapage mobile (12), en position complètement embrayée, le diaphragme (9) libérant l'organe de rattrapage mobile (12) et empêchant le déplacement de l'organe de détection mobile (16), en position complètement débrayée, le diaphragme (9) venant toujours en appui sur l'un au moins desdits organes mobiles (12, 16) entre ses positions totalement embrayée et totalement débrayée.

11. Procédé de montage d'un dispositif d'embrayage selon l'une des revendications 3 à 10, **caractérisé en ce que** le plateau de pression (3) est annulaire, et **en ce que** ledit procédé comporte une étape de montage du premier organe élastique (19) lors de laquelle la première extrémité (19a) est reliée à l'organe mobile correspondant (16) et lors de laquelle le premier organe élastique (19) est déformé de façon à ce que sa seconde extrémité (19b) dépasse circonférentiellement le plot (3b), puis relâché de façon à ce qu'une partie (19i) au moins de la seconde extrémité (19b) s'engage progressivement dans l'évidement (3d) du plot (3a), jusqu'à ce qu'une partie (19g) de la seconde extrémité (19b) vienne en appui sur une extrémité circonférentielle (3f) du plot (3a).

12. Procédé de montage d'un dispositif d'embrayage selon l'une des revendications 3 à 10, **caractérisé en ce que** le plateau de pression (3) est annulaire, et **en ce que** ledit procédé comporte une étape de montage du premier organe élastique (19) lors de laquelle la première extrémité (19a) est reliée à l'organe de détection mobile correspondant (16) et lors de laquelle la seconde extrémité (19b) du premier organe élastique (19) est engagée axialement sur le plot de façon à ce que ladite seconde extrémité (19b) se déforme élastiquement par appui sur une extrémité oblique ou arrondie (3e) du plot (3a) avant qu'une partie (19i) au moins de ladite seconde extrémité (19b) s'engage par encliquetage ou par rappel élastique dans l'évidement (3d) du plot (3a).
